# EUROPÄISCHE PATENTSCHRIFT

(11) **EP 2 989 348 B1**
(45) Veröffentlichungstag und Bekanntmachung des Hinweises auf die Patenterteilung: **06.11.2019**
(21) Anmeldenummer: 14715014.8
(22) Anmeldetag: 04.04.2014
(51) Int. Cl.: F16H 3/10, F16D 41/00

(54) **LASTSCHALTGETRIEBE, INSBESONDERE FÜR ELEKTROANTRIEBE**
POWERSHIFT TRANSMISSION, IN PARTICULAR FOR ELECTRIC DRIVES
BOÎTE DE VITESSES COUPLABLE SOUS CHARGE, DESTINÉE EN PARTICULIER À DES ENTRAÎNEMENTS ÉLECTRIQUES

(30) Priorität: 24.04.2013 DE 102013207413
(43) Veröffentlichungstag der Anmeldung: 02.03.2016
(73) Patentinhaber: Bayerische Motoren Werke Aktiengesellschaft, 80809 München (DE)
(72) Erfinder: KÖNIG, Roland, 82392 Habach (DE)
(86) Internationale Anmeldenummer: PCT/EP2014/056764
(87) Internationale Veröffentlichungsnummer: WO 2014/173651

(56) Entgegenhaltungen:
- WO-A1-2008/096140
- DE-A1- 10 149 173
- DE-C- 218 543
- DE-C- 967 545
- DE-C- 969 740
- FR-A- 1 420 205
- FR-A1- 2 819 570
- FR-A1- 2 946 293
- GB-A- 363 772
- JP-A- H08 226 501

## Beschreibung

Die vorliegende Erfindung betrifft ein Lastschaltgetriebe gemäß dem Oberbegriff des Patentanspruches 1.

Aus der gattungsgemäßen WO 2008/096140 A1 ist eine Antriebseinrichtung bekannt. Aus der DE 218 543 C ist ein Zahnräder-Wechsel- und Wendegetriebe bekannt.

Bei Pkw-Fahrzeugen mit reinem Elektroantrieb werden bislang überwiegend Elektroantriebe mit festem Übersetzungsverhältnis eingesetzt. Auch ein Elektromotor ist aber nicht über sein gesamtes Drehmoment-/Drehzahlkennfeld gleichermaßen effizient. Um die Effizienz weiter zu optimieren, wäre eine zweite Gangstufe von Vorteil.

Ein Zweiganggetriebe könnte z.B. als Planetengetriebe mit zwei Kupplungen bzw. Bremsen dargestellt werden. Jeder der beiden Gänge hätte dann seine eigene Kupplung. Um einen Gang einzulegen müsste eine der beiden Kupplungen z. B. hydraulisch geschlossen werden. Der Schaltvorgang könnte dann zugkraftunterbrechungsfrei und komfortabel ausgeführt werden. Aufgrund der im Ölbad offen mitlaufenden zweiten Kupplung bzw. Bremse entstünden aber nicht zu vernachlässigende Schlupfverluste.

Ein Zweiganggetriebe könnte auch als Doppelkupplungsgetriebe dargestellt werden. Jeder der beiden Gänge hätte seine eigene Kupplung, die hydraulisch oder elektromechanisch angesteuert würde. Auch hier träten an der offenen Kupplung beträchtliche Schlupfverluste auf.

Eine weitere Möglichkeit bestünde in einer synchronisierten Klauenschaltung. Um einen komfortablen Gangwechsel zu ermöglichen, müsste der Elektromotor in der Drehzahl vor dem Einlegen eines Ganges "angeglichen" werden. Der Schaltvorgang könnte aber nicht zugkraftunterbrechungsfrei ausgeführt werden. Lastschaltungen wären somit nicht möglich.

Aufgabe der Erfindung ist es, ein Lastschaltgetriebe, insbesondere für Elektrofahrzeuge, anzugeben, das konstruktiv einfach aufgebaut ist und das einen hohen Wirkungsgrad aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Getriebe, insbesondere ein Lastschaltgetriebe, mit einer Antriebswelle, auf der ein erstes Zahnrad und ein zweites Zahnrad jeweils drehbar angeordnet ist.

Parallel zur Antriebswelle ist eine Vorgelege-/Abtriebswelle angeordnet, über die Drehmoment z. B. auf ein Differentialgetriebe übertragen werden kann. Auf der Vorgelege-/Abtriebswelle ist ein drittes Zahnrad drehfest angeordnet, welches permanent mit dem auf der Antriebswelle angeordneten ersten Zahnrad kämmt. Ferner ist auf der Vorgelege-/Abtriebswelle ein viertes Zahnrad drehfest angeordnet, das permanent mit dem auf der Antriebswelle drehbar angeordneten zweiten Zahnrad kämmt.

Desweiteren ist ein erstes "Formschlusselement" drehfest und verschieblich auf der Vorgelege-/Abtriebswelle angeordnet. Das Formschlusselement kann eine erste Schaltposition einnehmen, in der es von dem ersten Zahnrad "entkoppelt" ist. In der ersten Schaltposition kann sich somit das erste Zahnrad in beide möglichen Drehrichtungen relativ zu dem ersten Formschlusselement und der Antriebswelle drehen. In einer zweiten Schaltposition ist das Formschlusselement zumindest in einer Drehrichtung mit dem ersten Zahnrad drehgekoppelt.

Ein wesentlicher Gedanke der Erfindung besteht darin, dass das erste Formschlusselement in seiner zweiten Schaltposition in einer ersten Drehrichtung des Zahnrads mit dem ersten Zahnrad drehgekoppelt ist und in einer der ersten Drehrichtung entgegengesetzten zweiten Drehrichtung des ersten Zahnrads über einen Freilauf von dem ersten Zahnrad entkoppelt ist. Das erste Zahnrad kann sich somit in der zweiten Drehrichtung auch bei geschlossenem Formschlusselement relativ zu diesem bzw. relativ zu der drehfest mit dem ersten Formschlusselement verbundenen Antriebswelle drehen.

Es kann vorgesehen sein, dass der Freilauf an dem ersten Formschlusselement angeordnet und zusammen mit diesem relativ zur Antriebswelle verschiebbar ist. In der zweiten Schaltposition steht der Freilauf in Eingriff mit dem ersten Zahnrad, was eine Drehmomentübertragung in der ersten Drehrichtung ermöglicht. In der zweiten Drehrichtung hingegen kann sich das Zahnrad relativ zu dem ersten Formschlusselement bzw. zu der Antriebswelle drehen.

Nach einer Weiterbildung der Erfindung ist ein zweites Formschlusselement vorgesehen, das drehfest und verschieblich auf der Vorgelege-/Abtriebswelle angeordnet ist.

Ferner kann eine Kupplung vorgesehen sein, die z. B. als Lamellenkupplung ausgebildet sein kann und die ein erstes Kupplungselement aufweist, das drehfest mit dem zweiten Zahnrad verbunden ist, und ein zweites Kupplungselement.

Das zweite Formschlusselement kann eine erste Schaltposition einnehmen, in der es drehfest mit dem ersten Zahnrad gekoppelt ist. Befindet sich das zweite Formschlusselement in seiner ersten Schaltposition, so ist das erste Zahnrad in beide Drehrichtungen drehfest mit der Antriebswelle gekoppelt.

Erfindungsgemäß ist vorgesehen, dass das zweite Formschlusselement in der ersten Schaltposition das erste Formschlusselement durchgreift oder übergreift. Befindet sich das zweite Formschlusselement in Eingriff mit dem ersten Zahnrad, so sperrt es den am ersten Formschlusselement vorgesehenen Freilauf, d. h. das erste Zahnrad ist dann permanent und in beide Drehrichtungen drehfest mit der Antriebswelle gekoppelt.

Das zweite Formschlusselement kann ferner eine zweite Schaltposition einnehmen, in der es von dem ersten Zahnrad entkoppelt und drehfest mit dem zweiten Kupplungselement gekoppelt ist.

Im Folgenden wird die Erfindung im Zusammenhang mit der Zeichnung näher erläutert. Es zeigen:
Figur 1 den konstruktiven Aufbau eines Zwei-Gang-Lastschaltgetriebes gemäß der Erfindung;
Figur 2 - 10 verschiedene Betriebszustände des in Figur 1 gezeigten Getriebes.

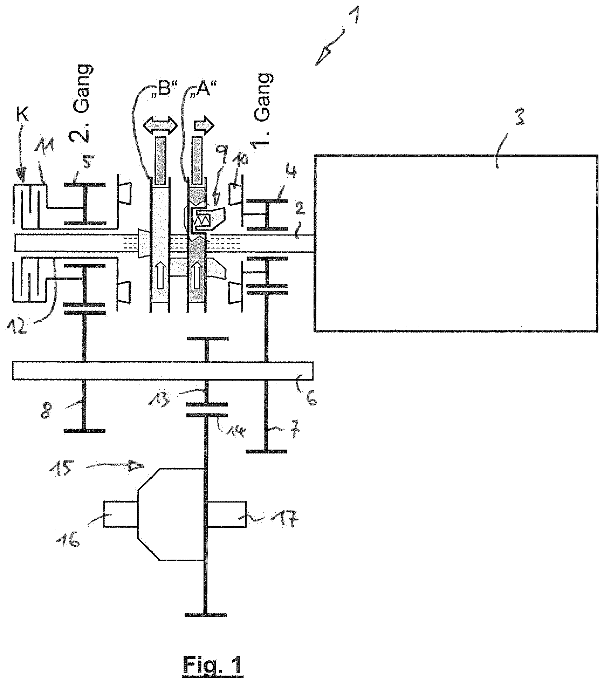

Figur 1 zeigt ein klauengeschaltetes Getriebe 1 mit zwei unabhängig voneinander verschiebbaren Formschlusselementen A, B, die hier als Schiebemuffen ausgebildet sind. Die beiden Schiebemuffen A, B sind drehfest aber verschieblich auf einer Antriebswelle 2 angeordnet. Die Antriebswelle 2 wird von einem Antriebsmotor 3 angetrieben, bei dem es sich z. B. um einen Elektromotor handeln kann.

Auf der Antriebswelle 2 sind drehbar ein erstes Zahnrad 4 und eine zweites Zahnrad 5 angeordnet.

Parallel zur Antriebswelle 2 ist eine Vorgelege-/Abtriebswelle 6 angeordnet. Auf der Vorgelege-/Abtriebswelle 8 ist drehfest ein drittes Zahnrad 7 angeordnet, das mit dem ersten Zahnrad 4 kämmt. Ferner ist auf der Vorgelege-/Abtriebswelle 6 ein viertes Zahnrad 8 drehfest angeordnet, das mit dem zweiten Zahnrad 5 kämmt.

Das durch die Schiebemuffe A gebildete erste Formschlusselement ist, wie bereits erwähnt, drehfest und verschieblich auf der Antriebswelle 2 angeordnet. In der in Figur 1 gezeigten ersten Schaltposition (Öffnungsstellung) der Schiebemuffe A ist diese entkoppelt von dem ersten Zahnrad 4. Das erste Zahnrad 4 kann sich also unabhängig von der Schiebemuffe A bzw. der damit drehgekoppelten Antriebswelle 2 drehen.

An der Schiebemuffe A ist ein Freilauf 9 angeordnet, der durch Verschieben der Schiebemuffe A nach rechts in Eingriff mit einem Formschlusselement 10 des ersten Zahnrads 4 gebracht werden kann, was später noch näher erläutert wird.

Links neben der Schiebemuffe A ist das durch die zweite Schiebemuffe B gebildete zweite Formschlusselement B drehfest und verschieblich auf der Antriebswelle 2 angeordnet.

Ebenfalls auf der Antriebswelle 2 bzw. koaxial dazu ist eine Kupplung K angeordnet, die hier durch eine Lamellenkupplung gebildet ist. Die Kupplung K weist ein erstes Kupplungselement 11 (Außenlamellenträger) auf, das drehfest mit dem zweiten Zahnrad 5 verbunden ist, sowie ein zweites Kupplungselement 12 (Innenlamellenträger), das durch Verschieben der zweiten Schiebemuffe B mit dieser drehgekoppelt werden kann.

Auf der Vorgelege-/Abtriebswelle 6 ist ein Abtriebszahnrad 13 angeordnet, welches mit einem Antriebsrad 14 eines Differentialgetriebes 15 kämmt, das eine linke Abtriebswelle 16 und ein reche Abtriebswelle 17 aufweist.

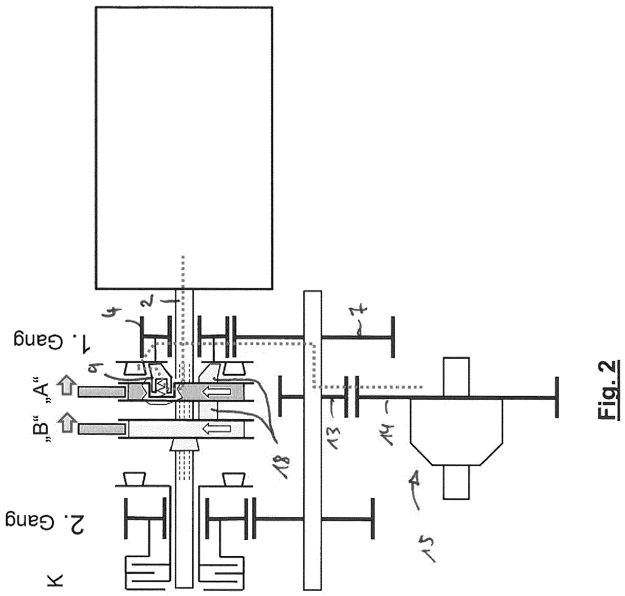

Figur 2 zeigt den Betriebszustand, bei dem der erste Gang eingelegt ist. In diesem Betriebszustand befindet sich die Schiebemuffe A in einer nach rechts verschobenen Schaltposition, in der der Freilauf 9 in Eingriff mit dem ersten Zahnrad 4 steht.

Die zweite Schiebemuffe B ist ebenfalls nach rechts in eine Schaltposition verschoben, die als "erste Schaltposition" bezeichnet wird. In der ersten Schaltposition der Schiebemuffe B befindet sich ein Formschlusselement 18 der zweiten Schiebemuffe B in Eingriff mit dem ersten Zahnrad 4. Wie aus Figur 2 ersichtlich ist, durchgreift das Formschlusselement 18 der zweiten Schiebemuffe B die erste Schiebemuffe A. Über das Formschlusselement 18 ist das erste Zahnrad in beide Drehrichtungen mit der zweiten Schiebemuffe B und somit mit der Antriebswelle 2 drehgekoppelt, d. h. sowohl im Schubbetrieb als auch im Zugbetrieb.

Der Drehmomentfluss in diesem Betriebszustand ist gestrichelt eingezeichnet. Im Zugbetrieb wird Drehmoment von der Antriebswelle 2 über die Schiebemuffe A, den Freilauf 9, das erste Zahnrad 4, das dritte Zahnrad 7, das Abtriebsrad 13, und das Antriebsrad 14 auf das Differentialgetriebe 15 übertragen.

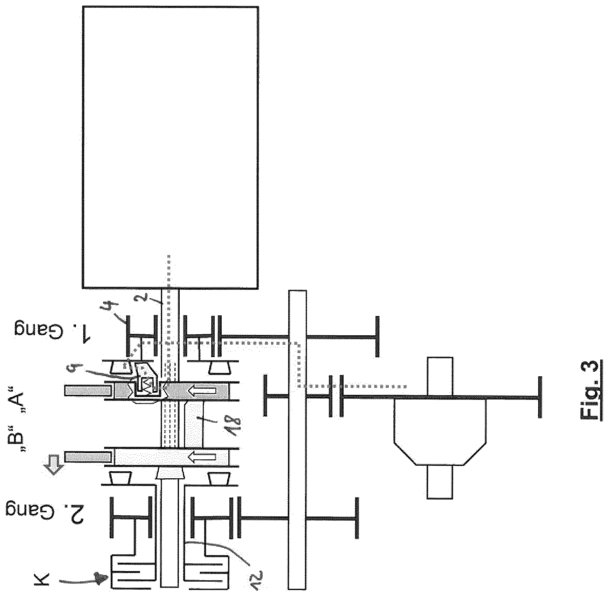

Figur 3 zeigt einen Betriebszustand, in dem ein Gangwechsel vom ersten auf den zweiten Gang vorbereitet wird. Hierzu wird zunächst die Kupplung K geöffnet, sofern sie nicht ohnehin bereits offen war. Anschließend wird die Schiebemuffe B nach links verschoben, in eine Stellung, in der das Formschlusselement 18 der Schiebemuffe B außer Eingriff, d. h. nicht mehr im Eingriff mit dem ersten Zahnrad 4 steht.

Durch das nach links Verschieben der Schiebemuffe B wird diese in Eingriff mit dem zweiten Kupplungselement 12 (Innenlamellenträger) gebracht. Der zweite Gang überträgt zunächst noch kein Drehmoment, da die Kupplung K geöffnet ist. Drehmoment wird vielmehr weiterhin von der Antriebswelle 2 auf die Schiebmuffe A und von dieser über den Freilauf 9 auf das erste Zahnrad 4 übertragen.

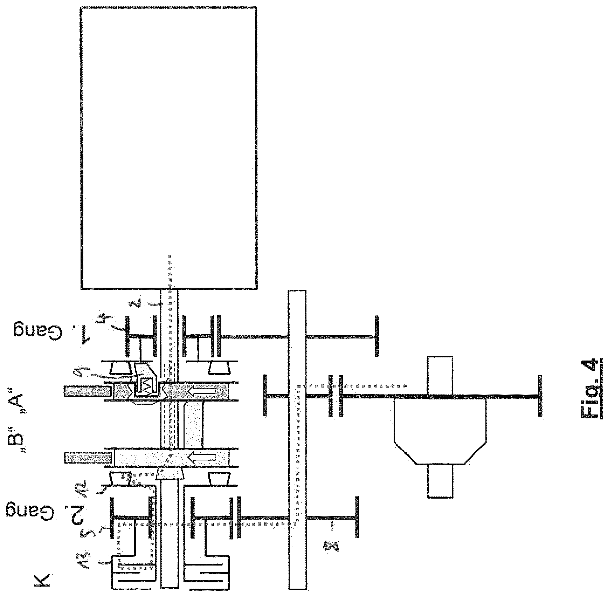

Figur 4 zeigt die Phase des Einlegens des zweiten Gangs, d. h. die Phase der Momentenübergabe vom ersten Gang auf den zweiten Gang. Dies geschieht durch Schließen der Kupplung K. Wie durch die gestrichelte Linie angedeutet ist, erfolgt der Drehmomentfluss bei eingelegtem zweiten Gang, d. h. bei geschlossener Kupplung K, von der Antriebswelle 2 über die Schiebemuffe B auf das zweite Kupplungselement 12 und von diesem über das erste Kupplungselement 13 auf das zweite Zahnrad 5 und von diesem auf das vierte Zahnrad 8.

Wie aus Figur 4 ersichtlich ist, befindet sich in dieser Phase die Schiebemuffe A noch in ihrer rechten Schaltposition (zweite Schaltposition), in der der Freilauf 9 weiterhin in Eingriff mit dem ersten Zahnrad 4 steht. Da sich im zweiten Gang bei gleicher Antriebsmotordrehzahl die Vorgelegewelle-/Abtriebswelle 6 schneller dreht als im ersten Gang, dreht sich auch das erste Zahnrad 4 entsprechend schneller als die Antriebswelle 2. Dies wird durch den Freilauf 9 ermöglicht. Der Freilauf 9 gestattet es also, dass das erste Zahnrad 4 hinsichtlich seiner Drehzahl die Antriebswelle 2 "überholt".

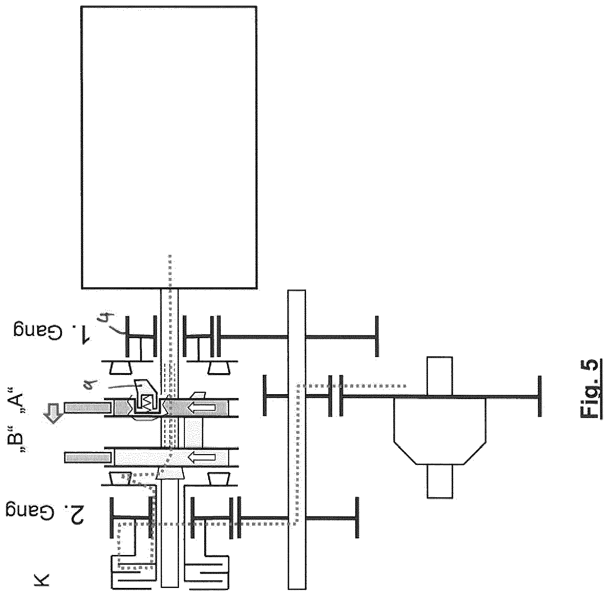

Figur 5 zeigt den Abschluss des Gangwechsels vom ersten Gang in den zweiten Gang. Hierzu wird die Schiebemuffe A in ihre bereits in Figur 1 gezeigte erste Position nach links verschoben, in der der Freilauf 9 vom ersten Zahnrad 4 entkoppelt ist.

Wie anhand der einzelnen Figuren nachvollziehbar ist, erfolgt das Schalten vom ersten in den zweiten Gang ohne jeglichen Drehmomenteinbruch.

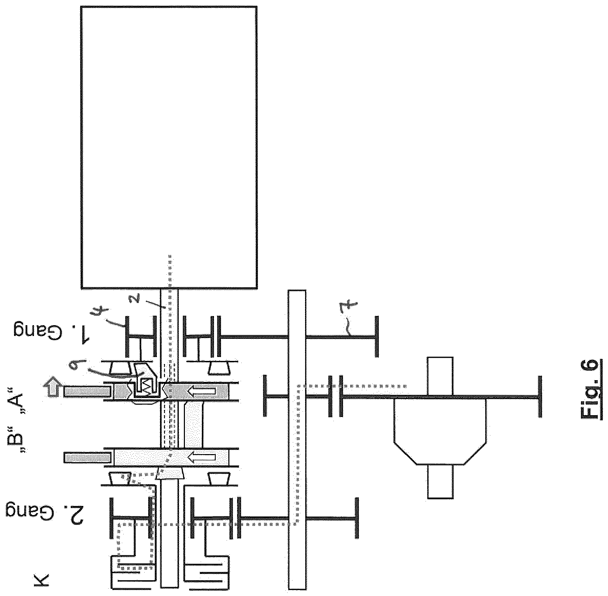

Figur 6 zeigt die Vorbereitung einer Rückschaltung, d. h. einer Schaltung vom zweiten Gang in den ersten Gang. Hierzu wird zunächst die Schiebemuffe A nach rechts in ihre zweite Schaltposition verschoben. Dadurch wird der Freilauf 9 in Eingriff mit dem ersten Zahnrad 4 gebracht. Da das erste Zahnrad 4 durch das dritte Zahnrad 7 angetrieben wird, dreht das erste Zahnrad 4 schneller als die Antriebswelle 2. Der Freilauf 9 befindet sich also im Freilaufzustand, was das oben bereits erwähnte Überholen der Antriebswelle 2 durch das erste Zahnrad 4 ermöglicht.

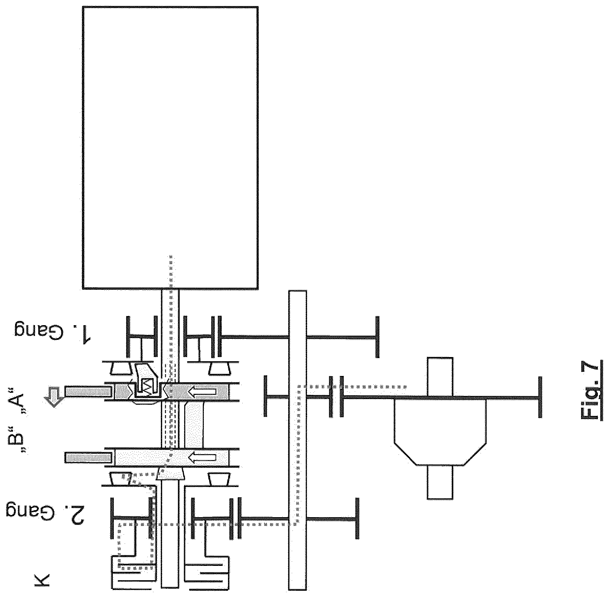

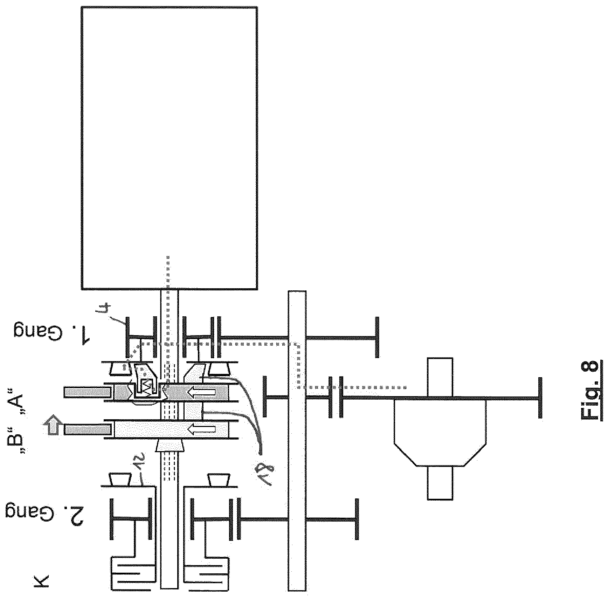

Figur 7 zeigt die nächste Phase des Rückschaltvorgangs. Hierbei wird die Kupplung K geöffnet, was dazu führt, dass der Freilauf "eingeholt" wird, d. h. dass der Freilauf die Drehmomentübertragung übernimmt. Anschließend wird, wie in Figur 8 dargestellt, bei geöffneter Kupplung K die Schiebemuffe B nach rechts verschoben. Dadurch wird das zweite Kupplungselement 12 von der Schiebemuffe B entkoppelt und das Formschlusselement 18 der Schiebemuffe B mit dem ersten Zahnrad 4 verriegelt.

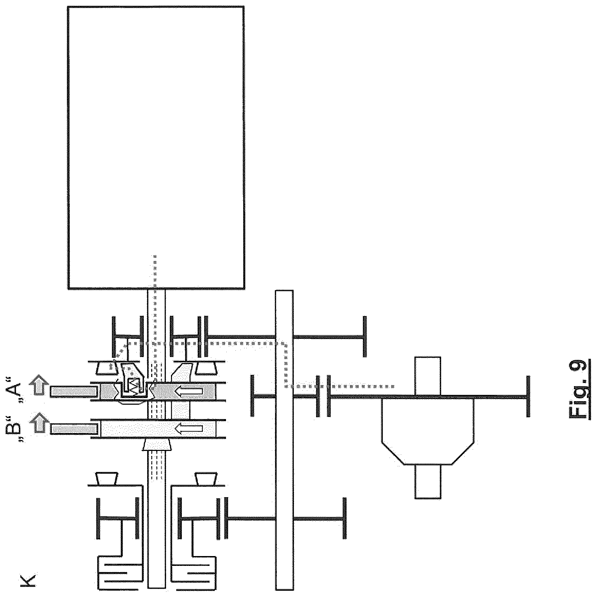

Dadurch wird in Figur 9 wieder der in Figur 2 gezeigte Schaltzustand erreicht, wobei die gestrichelte Linie in Figur 9 den Drehmomentfluss im Zugbetrieb zeigt.

Die Aktuierung der Schiebemuffen A, B kann z. B. elektromechanisch mittels Servomotoren erfolgen. Alternativ dazu wäre auch eine hydraulische Aktuierung der Schiebemuffen mittels eines Systems mit einem hydraulischen Druckspeicher denkbar. Im Vergleich zu permanent fördernden Hydrauliksystemen, wie sie z. b. von Automatik- oder Doppelkupplungsgetrieben bekannt sind, wäre ein hydraulisches System mit einem Druckspeicher deutlich effizienter.

Mit dem erfindungsgemäßen Getriebe kann die Verlustreibung während des normalen Betriebs im ersten Gang oder im zweiten Gang minimiert werden. Dies wird dadurch erreicht, dass die verlustbehafteten Elemente "Kupplung" und "Freilauf" nur während der Schaltvorgänge verwendet werden und die Anzahl der Verzahnungseingriffe minimal ist. Für den Fall einer hydraulischen Aktuierung der Schiebemuffen A, B können diese mittels einfacher Wegeventile umgeschaltet werden. Eine Feinregulierung ist nicht erforderlich. Selbst bei einem Ausfall der Kupplungsaktuierung sind immer noch Schaltungen mit Zugkraftunterbrechung möglich. Somit ist eine hohe Systemverfügbarkeit gewährleistet.

## Patentansprüche

1. Lastschaltgetriebe (1), mit
- einer Antriebswelle (2),
- einem ersten Zahnrad (4) und einem zweiten Zahnrad (5), die jeweils drehbar auf der Antriebswelle (2) angeordnet sind,
- einer Vorgelege-/Abtriebswelle (6),
- einem dritten Zahnrad (7), das drehfest auf der Vorgelege-/Abtriebswelle (6) angeordnet ist und das mit dem ersten Zahnrad (4) kämmt,
- einem vierten Zahnrad (8), das drehfest auf der Vorgelege-/Abtriebswelle (6) angeordnet ist und das mit dem zweiten Zahnrad (5) kämmt,
- einem ersten Formschlusselement (A), das drehfest und verschieblich auf der Antriebswelle (2) angeordnet ist
- und das in einer ersten Schaltposition entkoppelt von dem ersten Zahnrad (4) ist
- und das in einer zweiten Schaltposition mit dem ersten Zahnrad (4) drehgekoppelt ist
wobei das erste Formschlusselement (A) in der zweiten Schaltposition
- in einer ersten Drehrichtung des ersten Zahnrads (4) mit dem ersten Zahnrad (4) drehgekoppelt ist und
- in einer der ersten Drehrichtung entgegengesetzten zweiten Drehrichtung des ersten Zahnrads (4) über einen Freilauf (9) von dem ersten Zahnrad (4) entkoppelt ist und wobei
ein zweites Formschlusselement (B) vorgesehen ist, das drehfest und verschieblich auf der Antriebswelle angeordnet ist und wobei das zweite Formschlusselement (B) eine erste Schaltposition einnehmen kann, in der es drehfest mit dem ersten Zahnrad (4) gekoppelt ist
**dadurch gekennzeichnet, dass**
das zweite Formschlusselement (B) in der ersten Schaltposition das erste Formschlusselement (A) durchgreift oder übergreift.

2. Lastschaltgetriebe nach Anspruch 1, **dadurch gekennzeichnet, dass** der Freilauf (9) an dem ersten Formschlusselement (A) angeordnet und in der zweiten Schaltposition in Eingriff mit dem ersten Zahnrad (4) ist.

3. Lastschaltgetriebe nach einem der Ansprüche 1, **dadurch gekennzeichnet, dass** eine Kupplung (K) vorgesehen ist, die ein erstes Kupplungselement (11) aufweist, das drehfest mit dem zweiten Zahnrad (5) verbunden ist, und ein zweites Kupplungselement (12).

4. Lastschaltgetriebe nach einem der Ansprüche 1 bis 3, **dadurch gekennzeichnet, dass** das zweite Formschlusselement (B) eine zweite Schaltposition einnehmen kann, in der es von dem ersten Zahnrad (4) entkoppelt ist und drehfest mit dem zweiten Kupplungselement (12) gekoppelt ist.

5. Lastschaltgetriebe nach einem der Ansprüche 1 bis 4, **dadurch gekennzeichnet, dass** ein Elektromotor (3) zum Antreiben der Antriebswelle (2) vorgesehen ist.

6. Lastschaltgetriebe nach einem der Ansprüche 1 bis 5, **dadurch gekennzeichnet, dass** auf der Vorgelege-/Abtriebswelle (6) ein fünftes Rad (13) angeordnet ist, das mit einem Antriebsrad (14) eines Differentialgetriebes (15) kämmt.

## Claims

1. A powershift transmission (1), with
- a drive shaft (2),
- a first gear wheel (4) and a second gear wheel (5), which in each case are arranged rotatably on the drive shaft (2),
- a layshaft/output shaft (6),
- a third gear wheel (7) which is arranged non-rotationally on the layshaft/output shaft (6) and which meshes with the first gear wheel (4),
- a fourth gear wheel (8) which is arranged non-rotationally on the layshaft/output shaft (6) and which meshes with the second gear wheel (5),
- a first positively-locking element (A) which is arranged non-rotationally and displaceably on the drive shaft (2)
- and which in a first selection position is uncoupled from the first gear wheel (4)
- and which in a second selection position is rotationally coupled with the first gear wheel (4),
wherein the first positively-locking element (A) in the second selection position
- in a first direction of rotation of the first gear wheel (4) is rotationally coupled with the first gear wheel (4), and
- in a second direction of rotation of the first gear wheel (4) opposed to the first direction of rotation is uncoupled from the first gear wheel (4) by way of a freewheel (9), and wherein
a second positively-locking element (B) is provided which is arranged non-rotationally and displaceably on the drive shaft, and wherein the second positively-locking element (B) can assume a first selection position in which it is coupled non-rotationally with the first gear wheel (4),
**characterised in that**
the second positively-locking element (B) in the first selection position extends through or over the first positively-locking element (A).

2. A powershift transmission according to Claim 1, **characterised in that** the freewheel (9) is arranged on the first positively-locking element (A) and in the second selection position is engaged with the first gear wheel (4).

3. A powershift transmission according to one of Claims 1 to 2, **characterised in that** a clutch (K) is provided which has a first clutch element (11) which is connected non-rotationally to the second gear wheel (5), and a second clutch element (12).

4. A powershift transmission according to one of Claims 1 to 3, **characterised in that** the second positively-locking element (B) can assume a second selection position in which it is uncoupled from the first gear wheel (4) and is coupled non-rotationally with the second clutch element (12).

5. A powershift transmission according to one of Claims 1 to 4, **characterised in that** an electric motor (3) for driving the drive shaft (2) is provided.

6. A powershift transmission according to one of Claims 1 to 5, **characterised in that** a fifth wheel (13) is arranged on the layshaft/output shaft (6), which wheel meshes with a drive wheel (14) of a differential gear (15).

## Revendications

1. Boîte de vitesse commutable en charge (1) comprenant :
- un arbre d'entraînement (2),
- un premier pignon (4) et un second pignon (5) montés respectivement à rotation sur l'arbre d'entraînement (2),
- un arbre intermédiaire/arbre de sortie (6),
- un troisième pignon (7) solidaire en rotation de l'arbre intermédiaire/arbre de sortie (6) et en prise avec le premier pignon (4),
- un quatrième pignon (8) solidaire en rotation de l'arbre intermédiaire/arbre de sortie (6) et en prise avec le second pignon (5),
- un premier élément liaison par la forme (A) monté solidaire en rotation et coulissant sur l'arbre d'entraînement (2), et qui
• dans une première position de commutation, est découplé du premier pignon (4), et
• dans une seconde position de commutation, est couplé en rotation avec le premier pignon (4),
le premier élément de liaison par la forme (A), dans la seconde position de commutation, est
- couplé en rotation au premier pignon (4) dans le premier sens de rotation de ce premier pignon (4), et
- dans un second sens de rotation, opposé au premier sens de rotation du premier pignon (4), cet élément est découplé du premier pignons denté (4) par un dispositif à roue libre (9), et
il est prévu un second élément de liaison par le forme (B) solidaire en rotation et coulissant sur l'arbre d'entraînement et le second élément de liaison par la forme (B) peut prendre une première position commutation dans laquelle il est solidaire en rotation du premier pignon denté (4), boîte **caractérisée en ce que**
le second élément de liaison par le forme (B) dans la première position commutation, chevauche ou traverse le premier élément de liaison par la forme (A).

2. Boîte de vitesse commutable en charge selon la revendication 1, **caractérisée en ce que**
le dispositif de roue libre (9) est prévu sur le premier élément de liaison par la forme (A) et dans la seconde position de commutation il est en prise avec le premier pignon (4).

3. Boîte de vitesse commutable en charge selon la revendication 1,
**caractérisée en ce qu'**
il est prévu un embrayage (K) qui comporte un premier élément d'embrayage (11) solidaire en rotation du second pignon (5) et un second élément d'embrayage (12).

4. Boîte de vitesse commutable en charge selon l'une des revendications 1 à 3,
**caractérisée en ce que**
le second élément de liaison par la forme (B) peut prendre une seconde position de commutation dans laquelle il est découplé du premier pignon (4) et couplé solidairement en rotation avec le second élément d'embrayage (12).

5. Boîte de vitesse commutable en charge selon l'une des revendications 1 à 4,
**caractérisée en ce qu'**
il est prévu un moteur électrique (3) pour entrer l'arbre d'entraînement (2).

6. Boîte de vitesse commutable en charge selon l'une des revendications 1 à 5,
**caractérisée en ce que**
l'arbre intermédiaire/arbre de transmission (6) comporte un cinquième pignon (13) en prise avec le pignon d'entraînement (14) d'un différentiel (15).
